Europäisches Patentamt

European Patent Office

Office européen des brevets

(11) Publication number: **0 177 543**
**B1**

# (12) EUROPEAN PATENT SPECIFICATION

(45) Date of publication of patent specification: **21.03.90**

(21) Application number: **85901544.8**

(22) Date of filing: **01.04.85**

(86) International application number:
**PCT/HU85/00021**

(87) International publication number:
**WO 85/04390 10.10.85 Gazette 85/22**

(51) Int. Cl.⁵: **C 02 F 1/58,** C 02 F 1/42,
C 02 F 1/28

(54) **PROCESS AND EQUIPMENT FOR REMOVAL OF SUSPENDED MATERIAL, BIOGENETIC NUTRIENTS AND DISSOLVED METAL COMPOUNDS FROM SEWAGE CONTAMINATED WITH ORGANIC AND/OR INORGANIC SUBSTANCES.**

(30) Priority: **02.04.84 HU 131984**

(43) Date of publication of application:
**16.04.86 Bulletin 86/16**

(45) Publication of the grant of the patent:
**21.03.90 Bulletin 90/12**

(84) Designated Contracting States:
**AT BE CH DE FR GB IT LI NL SE**

(56) References cited:
DE-A-2 825 879
DE-B-2 156 471
US-A-3 723 308
US-A-4 364 909

(73) Proprietor: **VIZEPITÖIPARI TRÖSZT**
**Vaci utca 36**
**H-1056 Budapest (HU)**

(73) Proprietor: **KÖZPONTI KEMIAI KUTATO**
**INTEZET**
**Pusztaszeri ut 57**
**H-1025 Budapest (HU)**

(73) Proprietor: **VIZGAZDALKODASI TUDOMANYOS**
**KUTATO KÖZPONT**
**Kassai Janos ut 1**
**H-1095 Budapest (HU)**

(73) Proprietor: **KELETMAGYARORSZAGI VIZÜGYI**
**TERVEZÖ VALLALAT**
**Sagvari Körut 32**
**H-5000 Szolnok (HU)**

(72) Inventor: **KISS, Jeno**
**Kórház ut 27.**
**H-1035 Budapest (HU)**
Inventor: **HOSSZU, Adám**
**Zöldlomb utca 2.**
**H-1025 Budapest (HU)**
Inventor: **DEAK, Béla**
**Guttenberg tér 4.**
**H-1088 Budapest (HU)**
Inventor: **KALLO, Dénes**
**Frankel Leó ut 2-4.**
**H-1027 Budapest (HU)**

Courier Press, Leamington Spa, England.

EP 0 177 543 B1

# EP 0 177 543 B1

(72) Inventor: **PAPP, János**
**Fillér lépcso 2**
**H-1022 Budapest (HU)**
Inventor: **MESZAROS, Agnes**
**Thomán István ut 9/b.**
**H-1124 Budapest (HU)**
Inventor: **MUCSY, György**
**Martinovics tér 8.**
**H-1105 Budapest (HU)**
Inventor: **OLAH, József**
**Eperjes ut 46.**
**H-1204 Budapest (HU)**
Inventor: **URBANYI, György**
**Futórózsa ut 90.**
**H-1165 Budapest (HU)**
Inventor: **GAL, Tivadar**
**Kassai ut 41.**
**H-5000 Szolnok (HU)**
Inventor: **APRO, István**
**Csokonai ut 19.**
**H-5000 Szolnok (HU)**
Inventor: **CZEPEK, Gyula**
**Jászi F. ut 17.**
**H-5000 Szolnok (HU)**
Inventor: **TÖRÖCSIK, Ferenc**
**Ady Endre ut 18.**
**H-5000 Szolnok (HU)**
Inventor: **LOVAS, András**
**Ragó Antal ut 4.**
**H-5000 Szolnok (HU)**

(74) Representative: **Lehn, Werner, Dipl.-Ing. et al**
**Hoffmann, Eitle & Partner Patentanwälte**
**Arabellastrasse 4**
**D-8000 München 81 (DE)**

## Description

Technical field:

The invention relates to a process for removal of suspended materials, biogenetic nutrients and dissolved metal compounds from water being contaminated with organic and/or inorganic substances.

Background art:

In the present invention, the term biogenetic nutrients refers to substances containing nitrogen and phosphorus compounds, which are useful for cultivated plants.

Due to industrialization, urbanization and intensification of agriculture, contamination of water is an ever increasing global problem.

In general, methods of sewage treatment, which have been used so far, do not result in complete purification. The majority of the dissolved and colloidal contaminants and a considerable part of suspended solid particles get into the recipient.

The limitations of investments and steadily increasing energy costs do not permit realization of technologies for a perfect purification.

Water considered as purified usually contains still a considerable amount of dissolved material which consists generally of nitrogen and phosphorus compounds. These are the most important nutrients for plants, therefore their recovery for a direct application in agriculture improves the economy of sewage purification.

In addition, there are waste waters mainly of industrial origin where the dissolved substances consist predominantly of heavy metal salts. In general, these are toxic for the biosphere; their recovery by conventional processes, however, is too expensive. Sewage sludge arises in course of sewage treatment. At the time being, the most controversial questions are the utilization of sewage sludges and the conditions thereof.

Today it is well known that all organic substances in sewage sludge are valuable humus-forming materials. In view of its value as nutrient, opinions are different. The most significant reservations concerning its application in agriculture are connected to the heavy metal content and to the hygiene of its use because of the infections sewage sludges can cause. Although all over the world research programs are focused on the incorporation of heavy metals in plants and thereby into animal-human organism, the matter has not come yet to a rest. Recently, in some countries provisional rules prescribe the maximum of the acceptable loading of soils for each heavy metal.

The three major well-known processes for the treatment of sewage contaminated with organic substances are as follows:

— mechanical,

— biological,

— physico-chemical.

The so-called mechanical separation-processes are important steps in water and sewage treatment technologies. 30 to 40% purification can be attained, when solid suspensions are separated mechanically by specific weight differences.

The aim of secondary purification or biological step is to remove colloids and dissolved organic substances. The removal of organic substances by microorganisms results in the formation of inorganic substances, such as dissolved nitrogen and phosphorus salts.

As for sludge-loading the following sewage treatment systems can be distinguished:

a. partial biological treatment,

b. complete biological treatment,

c. complete biological treatment with nitrification,

d. complete biological treatment with sludge-stabilization — the so-called total oxidation process.

For the above systems one of the main difference is the time of aeration, which is

0.75—1.5 hours in case a;

3.00 hours in case b;

8.00 hours in case c;

24.00 hours in case d.

The energy needed for aeration increases with time, whereas the efficiency of oxygen consumption decreases with time due to the progress of oxidation. Since the aeration requires most of the energy in a sewage treatment plant, the extent of oxidation should thus be considered from economic aspects.

Physico-chemical purification processes are used if dispersed solids cannot be settled and mechanically separated as e.g. colloid suspensions (particle size 0.01—1.0 μm) or if the biological decomposition of the substances is too expensive or even impossible. Coagulation, precipitation and filtration are the main physico-chemical processes in connection with the invention. Specific costs of physico-chemical processes are relatively high, partly due to the expensive reagents required.

Physico-chemical processes are mostly used in the third treatment step in order to remove the rest of suspended material and in organic nitrogen and phosphorus compounds which have been partly formed during the previous biological treatment. In this way the water discharged from the sewage treatment plant is of a good quality, i.e. it can be re-used either in industrial processes, or can simply be omitted without

causing any eutrophization in surface waters.

In general, the third treatment step follows the complete biological purification and the attached nitrification. It increases, however, considerably both investment and operation costs.

The biological denitrification technologies involve nitrogen removal from the sewage having been oxidized previously to nitrate from ammonium with a high energy consumption by using an expensive and complicated process.

A usual way for denitrification is the ion-exchange technology with synthetic resin. Due to its special features this process is mainly used in drinking-water purification.

Other processes, as e.g. reversed osmosis, are even more expensive; accordingly, their practical use is rather limited.

Soluble inorganic phosphorus compounds — mostly orthophosphates — are removed in the third treatment step by chemical precipitation using aluminium or iron compounds.

For removing suspended materials iron and aluminium salts, lime, polyelectrolytes and the combination thereof are used. Such methods are dealt with in the "water treatment handbook" of Degremont, 5th Edition, Halsbed Press Book, John Wiley and Sons, New York, 1979/I/, in "Gewässerschutz, Wasser, Abwasser" (Vol. 17, Aachen, 1975), in "Anwendung von Fällungsverfahren zur Verbesserung der Leistungsfähigkeit biologischer Anlagen" (Institut für Bauingenieurwesen V. Technische Universität, München, 1978).

The above chemical treatments result in a 20—90% metal removal by formation of insoluble hydroxides. In the usual pH range between 6 and 8 the ammonium content remains unchanged.

According to the HU—A—175 558 approximately 90% of the orthophosphate can be removed by adding 200—300 mg aluminium sulfate to one liter of waste water, whereas the ammonium content remains unchanged.

In the HU—A—180 613 a process is described where COD is decreased by 30—40% with a charcoal treatment, but neither the amount of the suspended material, nor the ammonium content are changed. The removal of ammonium is usually carried out by nitrification followed by denitrification in order to avoid the undesired accumulation of $(NO_3)^-$ in the effluent.

Summarizing, the above processes have the following disadvantages:

The nitrification can be performed by a total biological oxidation which requires great investment and operating costs. Similar difficulties arise with denitrification, too. Moreover, the denitrification is very sensitive to temperature and the concentration of oxygen absorbed in water.

Moreover, medium should be added to the denitrification biomass which further increases the expenses and complicates the operation.

The reagents or additives used in waste water treatments exert rather specific effects. They are further of relatively high price (e.g. charcoal) and may bring about corrosion (e.g. aluminium sulfate).

The main aims of the present invention are:

— As a result of the purification process water should be produced, which can be re-used, or which must not exert impermissible detrimental effects on surface or underground water;

— Based on advanced research results in agronomy, biogenetic nutrients should be produced by the purification process for agriculture;

— Enabling the possibility of utilization of harmless sewage sludge in agriculture.

A further aim lies in the fact to change the role of sewage treatment plants restricted now only to the removal of impurities, by use of by-products. This reveals new economic aspects.

In order to achieve the aims outlined above, it is required

— to carry out an intense purification of contaminated water, which includes removal and/or recovery of solid, colloidal and dissolved materials by precipitating the gross of suspension and of nitrogen, phosphorus, metal contaminants in fewer technological steps than in conventional processes. Accordingly, the costs of investment and operation are reduced;

— to intensify simply existing sewage purification plants.

A process will be outlined which offers solutions to meet special demands and opens new economic aspects.

Disclosure of the Invention

The invention is based on the finding that some particular minerals, especially some kinds of natural zeolites exert physico-chemical effects on sewage water, thereby improving fundamentally both the efficiency of purification and economy of the process.

We found that the aforementioned effects can be achieved by using appropriate fractions of crushed and physico-chemically treated rocks containing natural zeolites like clinoptilolite or mordenite as materials coagulating partly on basis of selective ion-exchange and adsorption and as an accessory effect performing chemical precipitation, partly removing ammonium and heavy metal ions by selective ion-exchange and adsorption and further performing the filtration of suspended material.

The object to provide an improved process for waste water purification is solved according to the invention by a process as outlined in claim 1.

In rocks having been used in our experiments, clinoptilolite and mordenite, were present in a microcrystalline form. The microcrystallites are of 0.1 to 10 µm in size. Besides zeolites, the rocks contain quartz,

different clay minerals in some mass-% and the excess is amorphous volcanic glass.

It is well known that zeolites are cation-exchange inorganic polymers, since their lattice is formed by a rigid polyanionic alumino-silicate framework.

Besides the zeolitic pores of embedded clinoptilolite or mordenite the rock contains microporeses between the heterodisperse mineral constituents. In the raw material Na, K, Mg and Ca-cations are bound to the anion lattice which can be exchanged for other cations to a lesser or greater extent.

Considering these properties, we arrived at the conclusion that the raw material of appropriate grain size may exert even in its original form, i.e. without any preliminary ion exchange, a precipitating effect on suspended materials and colloids in sewage. In addition, due to its ion-exchange property it brings about the removal of ammonium and heavy metal ions (lead, nickel, copper, cadmium, mercury, silver, etc.). The selective ion-exchange effect is well known in the literature for zeolites and thus also for clinoptilolite. These expectations have been confirmed by our experiments. Moreover, we recognized experimentally that zeolites may be used for orthophosphate precipitation, if they contain cations, which can be exchanged for $NH_4^+$ and form insoluble orthophosphate precipitates. Accordingly, the basic concept of the invention is based on the finding that by continuous feeding of zeolite of adequate rate in an appropriate way, and in a proper grain size, simultaneously with floccule formation produced by coagulation and after the formation of floccules the adsorptive capacity of the sludge already containing zeolite can be well utilized for the removal of suspended material as well as of colloidal particles, and with an increasing efficiency for the removal of ammonium and heavy metal ions by ion-exchange.

In addition, it becomes possible to enhance the precipitation of orthophosphates by the preliminary modification of natural zeolites and to remove reliably the phosphate precipitate thus formed.

The process according to the invention unites all the advantages of preliminary and simultaneous phosphate precipitation, whereby the harmful phenomenon can be avoided, when the micro-floccules formed in the activated sludge aeration basin are discharged with purified sewage from the post-sedimentation basin, thus increasing the content of suspended material thereof.

Substances promoting removal of phosphates can be introduced into the zeolite in several ways, so by ion-exchange, adsorption, impregnation or by their combination. Depending on the requirements of a given sewage treatment, these processes can be combined to obtain the most appropriately modified zeolite.

After crushing and sieving, i.e. after a mere mechanical treatment, the zeolite containing rock in its natural form exerts besides coagulation further economically important effects:

— the sedimentation efficiency will be increased, resulting in an intensified operation of secondary settling equipments and in a considerable reduction of the suspended material content of purified, water;

— the ammonium and heavy metal-ion content will be reduced;

— in addition, the phosphorus content of water can be considerably reduced by this modified additive.

Moreover, the material with the complex effect used according to the invention provides further advantages in comparison with the known additives of physico-chemical effect:

— as a result of zeolite-feeding, biological activity of the activated sludge system is increased, due to the increased specific surface area, where decomposing bacteria settle and thus their concentration by volume is greater;

— the sludge thus formed is of better quality than that obtained in course of known processes, since

— it can easily be dehydrated;

— a manure can be obtained for the agriculture improving the nutritive value and water household of the soil, simultaneously reducing supposed dangers of application of sewage sludges.

Since clinoptilolite has a well known ion-exchange selectivity for ammonium, significant ammonium removal can be attained, and the formed ammonium clinoptilolite can be used in the agriculture; the investment and energy costs of the secondary purification stage as well as of the third, i.e. the denitrification stage can thus be reduced.

Besides the increased zeolitic sedimentation effect — as previously specified — a further benefit is achieved by the selective ion-exchange, i.e. the purified water is free of suspended material; it contains dissolved substances only.

Suspended material of minute amounts remaining after the previous processes can be removed from the cleaned water in accordance with the invention by the additional filtering effect of an ammonium-ion exchange zeolite bed.

Accordingly, a further main feature of the process suggested in the invention is based on the recognition that biological treatment should be performed without nitrification, only up to a complete biological oxidation of contaminating carbon compounds, thereafter the water containing dissolved ammonium is led through a filter bed filled with suitably prepared clinoptilolite on which ammonium is bound by ion-exchange. Nitrification and denitrification operations can thus be omitted, and the costs of deammoniation is appreciably less than that of one of these two steps.

Ammonium and heavy metal ion exchange properties as well as the utilization of these properties of natural and synthetic zeolites are well known in technical and patent literature. However, no solution has been given yet for enhancing the efficiency and improving the economy of biological sewage treatment by using natural zeolites or their modified forms. So e.g. DE—B 25 31 338 suggests zeolites phillipsite and gismondite for ion-exchange fillings, the regeneration of which can be carried out with a salt solution heated to 80°C. No details of ammonium ion-exchange for the sewage purification are discussed, and no reference is given for the treatment of the eluate formed in course of regeneration of the zeolite bed.

US—A—3 723 308 describes a process, where ammonium is removed with synthetic zeolite F from an aqueous solution which contains alkali or alkaline earth metals. As an aqueous solution in particular secondary effluent of municipal sewage purification plants is treated. The above patent describes more detailed the technology than the previous document. According to the illustrative embodiment, the municipal sewage is filtered, treated with activated sludge under aerobic conditions, and with a coagulating agent (aluminium sulfate). From a fraction of effluent ammonium is removed by ion exchange in a bed filled with zeolite F. The filling is regenerated with saturated lime solution which contains sodium and calcium chlorides, too. By scrubbing with air the solution of pH 12 is deammoniated.

A further advantage of the present invention is that ammonium ion selective clinoptilolite filling is regenerated with reagent(s) being a nutrient for plants. The excess of regenerating agent in a high concentration $NH_4^+$-solution results in a valuable fertilizer. This can be attained by regeneration of the clinoptilolite filling with an aqueous potassium salt solution. The solution having been obtained after the regeneration contains ammonium and potassium, both being useful vegetable nutrients. The solution can be directly utilized in agriculture.

A very important advantage of the process according to the invention is that treated water having been denitrified by ion-exchange does not carry eutrophicating materials or any impurities hazardous to the environment and the regeneration of the exhausted ion-exchanger does not result in air pollution. The potassium salt solution used for regeneration can be deammoniated by blowing with air and by increasing its pH value. After absorbing the gasous ammonium in a phosphoric acid solution a liquid fertilizer with a complex effect is obtained. In this case the regenerating salt solution can be repeatedly used by supplying potassium losses only.

Ammonium binding capacity of exhausted zeolites can be restored also by the biological decomposition of the ammonium-ions bound to the zeolite, i.e. by means of biological regeneration.

Biological regeneration is based on the fact that in the presence of oxygen certain bacteria — as e.g. Aerobacter aerogenes — are able to assimilate directly ammonia and simultaneously other well known ammonia-decompositions take place, namely the nitrification and denitrification. Nitrosomonas — using ammonium salts as sole energy source — oxidize them to nitride ions, whereas Nitrobacter oxidizes the nitrites produced by Nitrosomonas to nitrate thus supplying their energy demand. Thereafter — in theie absence of oxygen — nitrate is reduced to elementary nitrogen by the denitrifying bacteria. This sequence of biological processes results in removal of ammonium bound to the zeolite.

By proper manipulations, e.g. by aeration, by inoculation, by ensuring a minute concentration level of phosphorus, by removal of reaction products, etc., the period of biological regeneration can be considerably shortened.

As a result of biological regeneration ammonium ions are replaced by protons, and the formed H-zeolite has an outstanding ion-exchange capability for ammonium.

The clinoptilolite filter bed technology can be used alone for removing ammonium of high concentration from industrial waste waters prior to or without biological treatment, but according to the invention is used in connection with the process of claim 1.

Ion-exchange bed filled with clinoptilolite properly pretreated can be well utilized for the removal of a part of heavy metal ions contained in sewage, as e.g. lead, nickel, copper, cadmium, mercury, silver, etc., and the resulting effluent is ecologically harmless.

According to the invention the complex requirements are solved fundamentally so, that contaminated water in an activated sludge process is brought into contact with an agent, which contains a maximum of 50 mass-% of salts of mono-, bi- or trivalent metals, calculated as the cations thereof, and a minimum of 50 mass-% of a granulated rock containing at least 25 mass-% zeolite, preferably in form of clinoptilolite and/or mordenite.

The amount of metal salts or more preferably the amount of cations in the agent is determined by the desired effect. The amount of these constituents in the parent zeolite containing rock may be sufficient to attain an increased settling to remove fractions of phosphate, ammonium ions and heavy metal components.

According to the invention the applied agent has a definite content of metal salts resp. metal cations, where the metal content in said agent is increased in the untreated or dehydrated zeolite consisting of granules by ion-exchange, adsorption or impregnation, or by the combination of these processes so that the material thus obtained is homogenized.

As an example, the chemical compositions (in mass-%) of typical clinoptilolite and mordenite containing samples occurring in Hungary are as follows:

EP 0 177 543 B1

| Component | Rock containing clinoptilolite | Rock containing mordenite |
|---|---|---|
| $SiO_2$ | 68.35 | 70.60 |
| $Al_2O_3$ | 11.94 | 12.43 |
| $Fe_2O_3$ | 1.00 | 0.64 |
| $Na_2O_3$ | 0.32 | 1.46 |
| $K_2O$ | 4.15 | 4.89 |
| MgO | 0.21 | 0.04 |
| CaO | 1.64 | 1.80 |
| Less on ignition ($H_2O$) | 12.22 | 8.57 |

For the removal of a fraction of phosphate, ammonium and heavy metals as well as to enhance the settling during the mechanical and/or biological sewage treatments the waste water and/or the recirculation sludge from the secondary settling unit should be contacted with an agent of a grain size less than 200 μm.

Further advantages can be achieved, if biological sewage treatment is carried out without nitrification to the complete oxidation of carbon compounds, and the water after secondary settling is led through one or more zeolite beds connected in series or parallel, where the ammonium is perfectly removed. The grain size of zeolite should be between 1 and 10 mm, preferably between 2 and 5 mm.

It is advantageous to regenerate the exhausted zeolite with aqueous solution of a potassium salt. The solution after regeneration enriched in ammonium can be directly used for plant nitrition, or can be mixed with properly pretreated primary and excess sludge mixture discharged from the primary settling basin resulting in a high quality fertilizer.

Depending on the demand of plant nitrition, the used potassium salt solution containing ammonium can be deammoniated by aerating at higher pH values. The potassium salt solution is thus regenerated, and the evolved ammonia can be absorbed in phosphoric acid solution resulting in a liquid fertilizer of high nitrogen and phosphorus content.

By a preferred mode of realization of the process according to the invention the exhausted zeolite can be regenerated, i.e. deammoniated biologically, too.

The process according to the invention utilizes several advantageous properties of the zeolites employed in accordance with the purpose of treatment and modified appropriately, thus the efficiency of known purification processes can be increased, moreover further utilization of the separated contaminants mostly bound by ion-exchange becomes possible. Comparing with known processes, investment and operation costs are considerably reduced.

By applying the process according to the invention contaminants can be removed to an extent that treated water can be used again or can be released in the natural water system without any hazardous effect on the environment.

The properties both of dissolved materials and of sludges formed during the treatment are changed so far that useful plant nutrients can be gained, whereas toxic heavy metal ions are fixed in a water-insoluble state inaccessable for the plants.

The process according to the invention can be used for treatment of all types of waste waters formed as municipal sewage, industrial effluent or thin manure, which may be purified by mechanical, biological and physico-chemical treatments.

In the equipment according to the invention the sewage is fed in the primary settling tank, from which a pipe is leading to the mixing tank, into which the agent from a preparation container and the recirculation sludge from the secondary settling tank is introduced. The mixing tanks are linked to the adsorption zone ə having a communication with the aeration basin provided with oxygen introduction. From here a pipe is leading to the secondary settling tank, therefrom a fraction of the sludge is recirculated through a pipeline to the mixing tank. The excess sludge is fed back to the primary settling tank, from where the sludge is removed. The treated water leaves the secondary settling tank through the outlet.

In a preferred embodiment of the invention, the outlet of the secondary settling tank is leading to one or more zeolite beds — if more, connected in series or parallel — furtheron both the top and the bottom of the zeolite bed(s) are connected by pipes respectively, with the container of the regenerating solution. The discharge is possible into a buffer tank provided with outlet pipeline and with re-flush pipe to zeolite beds,

7

wherefrom the flush leaves through a duct into the primary settling tank. From the container the aqueous solution of potassium salt enriched with ammonium can be discharged through another pipeline.

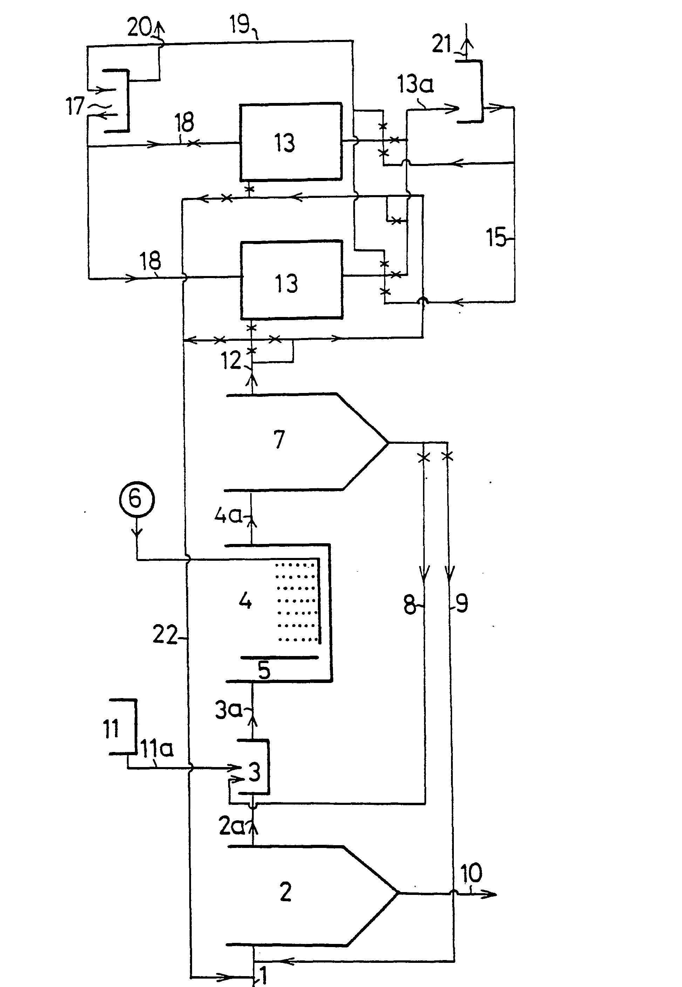

Brief Description of the Drawing

The invention will be described in detail by a preferred embodiment of the equipment by illustrating schematically the mode of operation and arrangement.

Mode for Carrying Out the Invention

The structural arrangement and operation scheme of a sewage treatment plant of 10.000 m³/d capacity is shown in the Figure. The input is urban sewage, the contaminations of which are:

$$300 \text{ g BOD/m}^3 \text{ and } 50 \text{ g NH}_4^+/\text{m}^3.$$

The sewage arriving through pipe 1 is passed through primary settling tank 2 with an effective volume of 900 m³, through mixing tank 3 with a volume of 50 m³, through the adsorption zone 5 with a useful volume of 1120 m³ being separated from the aeration basin 4, and finally through a secondary settling tank 7 with an effective volume of 900 m³.

The residence time of the sewage in the aeration basin 4 is 2.7 hours, and 3150 kg $O_2$/d is introduced by the oxygen feeding unit 6. In the secondary settling tank 7 cleaned sewage and activated sludge are separated. A fraction of the precipitated sludge is recirculated into the mixing tank 3 through the pipeline 8, while the excess of sludge is led through pipeline 9 to the primary settling tank 2, wherefrom it is removed with the primary sludge through the pipeline 10.

Appropriately prepared zeolite of suitable grain size is fed into the mixing tank 3 from the preparation container 11, as a consequence of which in the water leaving the secondary settling tank 7 through outlet 12 suspended material, ammonium, phosphorus, according $BOD_5$, COD, as well as heavy metal contents are considerably decreased.

Pretreated sewage leaving the secondary settling tank 7 through outlet 12 is led through one of the zeolite beds 13 working alternately. Beds 13 are filled with specially pre-treated material of proper grain size and of high clinoptilolite and/or mordenite content. The surface amounts to $2 \times 130$ m² while the volume equals to 400 m³.

The rest of suspended material and of ammonium is removed in zeolite beds 13 and the treated water flows through the buffer tank 14 and pipeline 21 into a recipient or to a place of utilization.

Zeolite beds 13 are flushed with purified water from buffer tank 14 through pipeline 15. Sludge floccules are removed from the upper layers and the flush-water with the sludge is fed back through flush-water duct 22 to the primary settling tank 2. After settling, the sludge is removed from the primary settling tank 2 through pipeline 10.

Exhausted zeolite beds 13 are flushed with the aqueous solution of potassium salt from container 17 through pipeline 18. In such a manner their ammonium-removing ability can be restored. Regenerating solution can be fed back to the container 17 through the pipeline 19 and can be repeatedly used. During regeneration, ammonium is exchanged for potassium in zeolite and the aqueous solution of potssium-salt enriched with ammonium is emitted through pipeline 20 and can be well utilized for plant nitrition.

On comparing the advantages of the process according to the invention with known and presently used sewage treatments, the following can be summarized:
— appreciably less construction and installation is required for the same treatment capacity;
— the operation needs by far less energy;
— on realizing the tertiary treatment, both the investment expenses and operation costs for the first and second stages are appreciably reduced as well;
— on attaching the process according to the invention to existing complete biological sewage treatments, which perform nitrification or total oxidation, the capacity of existing plants can be essentially increased;
— environmental contaminating substances considered as harmful up to now can be recovered as useful materials for agriculture without interfering with ecological interests;
— by denitrification water is produced of a purity, which enables its industrial utilization without any further treatment;
— as a result of treatment the sludge can be dehydrated more easily, even the stabilizing processes may be omitted;
— the sludge formed can be utilized in agriculture, since
  — it increases the organic substance content of soils,
  — it increases the nutrient content of soils,
  — it improves the water economy of the soil in the root zone,
  — nitrogen and phosphorous nutrients are retarded;
  — as a result of the aforementioned effects fertilizer requirement of the soils will be less;
  — as a result of the aforementioned effects elution of nitrogen and phosphorus nutrients can be diminished, consequently nitrate contamination of underground waters and eutrophization of recipients can be avoided,

## EP 0 177 543 B1

— acidification of soils due to the intense use of fertilizers can be suppressed or even avoided;
— fixed heavy metals cannot exert hazardous effects.

On taking into account all these advantages by utilization of the process according to the invention, the permanent and wide ranging deterioration of water quality can be slowed down, stopped or even reversed.

### Claims

1. Process for removal of suspended materials, biogenetic nutrients and dissolved metal compounds from water contaminated with organic and/or inorganic substances, characterized in dosing, to a completely mixed type activated sludge reactor for the removal of a fraction of phosphate, ammonium and heavy metals as well as to enhance the settling during the mechanical and/or biological sewage treatments, an agent of a grain size less than 200 μm which contains salts of mono-, bi- or trivalent metal cations in a maximum quantity of 50 mass percent and which contains, in a minimum quantity of 50 mass percent, rock granules containing at least 25 mass percent finely ground natural zeolite containing preferably clinoptilolite and/or mordenite, the metal content in said agent having optionally been increased by an ion-exchange, adsorption or impregnation treatment of the untreated zeolite, or by a combination of these processes, and the material thus obtained having been homogenized.

2. Process as claimed in claim 1, characterized in completing with an additional ammonium removal, when the organic compounds are oxidized without total nitrification, by passing the water through one or more connected beds filled with zeolite containing ion exchanger, preferably clinoptilolite and/or mordenite, of a grain size between 1 mm and 10 mm, preferably between 2 mm and 5 mm.

3. Process as claimed in claim 2, characterized in regenerating the ammonium binding capacity of said zeolite, after said capacity is exhausted, with aqueous potassium salt solution; enriching the regenerating solution with ammonium during regeneration of said zeolite, expelling ammonia gas from the regenerating solution, and absorbing it in phosphoric acid to produce a liquid fertilizer.

4. Process as claimed in claim 3, characterized in mixing said enriched solution with agriculturally acceptable fertilizer additives and with pretreated primary sludge and excess sludge, and homogenizing said mixture to produce an organic agriculturally acceptable fertilizer composition.

### Patentansprüche

1. Verfahren zur Entfernung suspendierter Materialien, biogener Nährstoffe und gelöster Metallverbindungen aus Wasser, das mit organischen und/oder anorganischen Substanzen verunreinigt ist, dadurch gekennzeichnet, dass man zu einem vollständigen Mischtyp eines Belebtschlammreaktors zur Entfernung eines Anteils von Phosphat, Ammonium und Schwermetallen als auch um den Absetzvorgang während der mechanischen und/oder biologischen Abwasseraufbereitung zu beschleunigen, ein Agens zugibt, das eine Korngrösse von weniger als 200 μm aufweist, das Salze von mono-, di- oder trivalenten Metallkationen in einem Höchstausmass von 50 Masse-% und das in einem Mindestausmass von 50 Mass-% Gesteinskörner enthält, die ihrerseits zumindest 25 Masse-% fein geriebenen, natürlichen Zeolith enthalten, der vorzugsweise Clinoptilolit und/oder Mordenit enthält, wobei der Metallgehalt in besagtem Agens gewünschtenfalls durch Ionenaustausch, Adsorption oder durch eine Imprägnierbehandlung des unbehandelten Zeoliths oder durch eine Kombination dieser Verfahren erhöht worden ist, und wodurch das so erhaltene Material homogenisiert erhalten wurde.

2. Verfahren nach Anspruch 1, dadurch gekennzeichnet, dass das Verfahren durch einen zusätzlichen Schritt zur Entfernung von Ammonium vervollständigt wird, wenn die organischen Verbindungen ohne vollständige Nitrifizierung oxidiert werden, indem man Wasser durch ein oder mehrere miteinander verbundene und mit einem Ionenaustauscher gefüllte Betten leitet, wobei der Ionenaustauscher Zeolith, vorzugsweise Clinoptilolit und/oder Mordenit, in einer Korngrösse zwischen 1 und 10 mm, vorzugsweise zwischen 2 und 5 mm, enthält.

3. Verfahren nach Anspruch 2, dadurch gekennzeichnet, dass die Kapazität des Zeoliths zur Bindung von Ammonium, nachdem diese Kapazität erschöpft ist, mit einer wässrigen Kaliumsalzlösung wieder hergestellt wird; wobei die Lösung zum Regenerieren während der Regenerierung des Zeolith an Ammonium bereichert, der gasförmige Ammoniak aus der Regenerierlösung ausgetrieben und in Phosphorsäure unter Erhalt eines flüssigen Düngemittels absorbiert wird.

4. Verfahren nach Anspruch 3, dadurch gekennzeichnet, dass man die angereicherte Lösung mit in der Landwirtschaft akzeptablen Düngemittelzusätzen und mit vorbehandeltem primären Klärschlamm und überschüssigem Klärschlamm vermischt und diese Mischung unter Erhalt einer in der Landwirtschaft akzeptierbaren organischen Düngemittelzusammensetzung homogenisiert.

### Revendications

1. Procédé pour éliminer les matières en suspension, les substances nutritives biogénétiques et les composés métalliques dissous d'une eau contaminée par des substances organiques et/ou minérales, caractérisé par l'apport à un réacteur à boue activée de type à mélange complet pour l'élimination d'une fraction des phosphates, de l'ammonium et des métaux lourds, ainsi que pour accroître la sédimentation

9

pendant les traitements mécaniques et/ou biologiques des eaux usées, d'une dose d'un agent ayant une granulométrie inférieure à 200 μm qui contient des sels de cations de métaux mono-, bi- ou trivalents en une quantité maximale de 50% en masse et qui contient, en une quantité minimale de 50% en masse, des granules de roche contenant au moins 25% en masse d'une zéolite naturelle finement broyée contenant de préférence de la clinoptilolite et/ou de la mordénite, la teneur en métaux dudit agent ayant facultativement été accrue par un traitement d'échange d'ions d'adsorption ou d'imprégnation de la zéolite non traitée ou par une combinaison de ces opérations, et la matière ainsi obtenu ayant été homogénéisée.

2. Procédé selon la revendication 1, caractérisé par la réalisation d'une élimination additionnelle de l'ammonium lorsque les composés organiques sont oxydés sans nitrification totale, par passage de l'eau à travers un ou plusieurs lits raccordés garnis d'un échangeur d'ions contenant une zéolite, de préférence la clinoptilolite et/ou la mordénite, ayant une granulométrie entre 1 mm et 10 mm, de préférence entre 2 mm et 5 mm.

3. Procédé selon la revendication 2, caractérisé par la régénération de la capacité de liaison de l'ammonium de ladite zéolite, après que cette capacité soit épuisée, avec une solution aqueuse de sel de potassium; l'enrichissement de la solution de régénération avec de l'ammonium pendant la régénération de ladite zéolite, le dégagement de l'ammoniac gazeux de la solution de régénération et son absorption dans de l'acide phosphorique pour produire un fertilisant liquide.

4. Procédé selon la revendication 3, caractérisé par le mélange de ladite solution enrichie avec des additifs pour fertilisant convenant en agriculture et avec la boue primaire prétraitée et l'excès de boue, et l'homogénéisation dudit mélange pour produire une composition organique fertilisante convenant à l'agriculture.

EP 0 177 543 B1